# EUROPÄISCHE PATENTSCHRIFT

(11) **EP 4 721 954 B1**
(45) Veröffentlichungstag und Bekanntmachung des Hinweises auf die Patenterteilung: **09.12.2026**
(21) Anmeldenummer: 24204296.8
(22) Anmeldetag: 02.10.2024
(51) Int. Cl.: B29C 51/42, B65B 47/02, B29K 105/00

(54) **HEIZVORRICHTUNG**
HEATING DEVICE
DISPOSITIF DE CHAUFFAGE

(43) Veröffentlichungstag der Anmeldung: 08.04.2026
(73) Patentinhaber: Uhlmann Pac-Systeme GmbH & Co. KG, 88471 Laupheim (DE)
(72) Erfinder: Niederbacher, Yannick, 88471 Laupheim (DE); Krahl, Wolfgang, 88471 Laupheim (DE)
(74) Vertreter: Wächter, Jochen

(56) Entgegenhaltungen:
- EP-A1- 4 403 498
- DE-A1- 102016 118 295
- US-A1- 2004 237 474
- US-A1- 2011 023 417

## Beschreibung

Die vorliegende Erfindung betrifft eine Heizvorrichtung zum Erwärmen einer Formfolie, eine Verpackungsmaschine mit einer solchen Heizvorrichtung, sowie ein Verfahren zum Betreiben einer solchen Verpackungsmaschine. Gattungsgemäße Vorrichtungen und Verfahren sind in den Patentschriften US2004/237474A1, EP4403498A1, US2011/023417A1 und DE102016118295A1 beschrieben.

Es sind Verpackungsmaschinen zum Verpacken von Produkten bekannt, bei denen zunächst Näpfe in eine Formfolie geformt werden, die anschließend mit Produkten befüllt und mittels einer Deckfolie verschlossen werden. Die resultierenden Verpackungen werden auch als Blisterpackungen und die Verpackungsmaschine folglich als Blistermaschine bezeichnet. Solche Verpackungsmaschinen können eine Heizvorrichtung umfassen, um die Formfolie auf die gewünschte Umformtemperatur zu erwärmen, bevor eine Formvorrichtung die Näpfe in die Formfolie formt. Bei einer Bauart umfasst die Heizvorrichtung zwei plattenförmige Werkzeuge, die jeweils eine Heizplatte aufweisen, und die Formfolie wird getaktet zwischen diesen zwei Werkzeugen hindurchgeführt. Werden die Werkzeuge geschlossen, treten die Heizplatten mit der Formfolie in Kontakt und erwärmen diese auf die gewünschte Temperatur. Es hat sich herausgestellt, dass die Heizplatten fertigungs- und/oder montagebedingt Unebenheiten aufweisen können. Dabei kann es sich um lokale Unebenheiten oder zum Beispiel um ein Aufbiegen der Heizplatten in Randbereichen handeln, wodurch im Bereich der Unebenheiten ein Spalt zwischen den Heizplatten gebildet werden kann. Diese Unebenheiten führen daher dazu, dass kein flächiger Kontakt der Heizplatten zur Formfolie hergestellt werden kann, was wiederum in einer ungleichmäßigen Wärmeeinbringung in die Formfolie resultiert. Die dadurch bedingte ungleichmäßige Temperaturverteilung in der Formfolie kann sich nachteilig auf den nachfolgenden Formvorgang sowie auf die Qualität der Formfolie und der erzeugten Näpfe auswirken, da z.B. die Umformtemperatur nicht im gesamten Formatbereich zuverlässig erreicht wird.

Es ist daher eine Aufgabe der vorliegenden Erfindung, eine Heizvorrichtung zum Erwärmen einer Formfolie bereitzustellen, die auf einfache und kostengünstige Art und Weise eine gleichmäßige und exakte Erwärmung der Formfolie ermöglicht.

Diese Aufgabe wird durch den Gegenstand des Anspruchs 1 gelöst. Bevorzugte Ausführungsformen sind Gegenstand der abhängigen Ansprüche.

Eine erfindungsgemäße Heizvorrichtung zum Erwärmen einer Formfolie umfasst ein erstes Werkzeug und ein zweites Werkzeug. Das erste Werkzeug umfasst eine erste Aufnahme und eine erste Heizplatte, die mittels einer Mehrzahl von ersten Federelementen an der ersten Aufnahme gelagert ist. Das zweite Werkzeug umfasst eine zweite Aufnahme und eine zweite Heizplatte, die mittels einer Mehrzahl von zweiten Federelementen an der zweiten Aufnahme gelagert ist. Die Federelemente der Mehrzahl von ersten Federelementen und der Mehrzahl von zweiten Federelementen weisen jeweils eine Federachse auf und sind in zumindest einer Richtung senkrecht zur Federachse versetzt zueinander angeordnet.

Auf diese Art und Weise wird eine Heizvorrichtung bereitgestellt, bei der die erste und die zweite Heizplatte mittels versetzt zueinander angeordneten Federelementen gelagert sind, wodurch sich in einem geschlossenen Zustand des ersten Werkzeugs und des zweiten Werkzeugs die Federkräfte der Mehrzahl von ersten Federelementen und der Mehrzahl von zweiten Federelementen nicht gegenseitig aufheben, sondern auf die Heizplatten wirken und diese elastisch verformen können. Durch die elastische Verformung passen sich die erste Heizplatte und die zweite Heizplatte aneinander an, wodurch Unebenheiten und Toleranzen ausgeglichen werden und ein flächiger Kontakt zur Formfolie hergestellt wird. Dadurch wird eine gleichmäßige und exakte Erwärmung der Formfolie ermöglicht, ohne den Arbeits- und Kostenaufwand bei Herstellung und Montage der Heizplatten wesentlich zu erhöhen.

Die Mehrzahl von ersten Federelementen und die Mehrzahl von zweiten Federelementen sind bevorzugt derart ausgebildet und angeordnet, dass die erste Heizplatte und/oder die zweite Heizplatte im geschlossenen Zustand des ersten und des zweiten Werkzeugs elastisch verformt werden. Dadurch kann die zuvor beschriebene gleichmäßige und exakte Erwärmung durch geeignete Auswahl und Positionierung der Federelemente sehr einfach erreicht werden.

Die Ausbildung und Anordnung der Mehrzahl von ersten Federelementen und die Mehrzahl von zweiten Federelementen sind unter anderem abhängig von der Steifheit der ersten Heizplatte und der zweiten Heizplatte und somit im Wesentlichen von deren Material und Dicke. Der Fachmann kann ohne großen Aufwand geeignete Federelemente auswählen und entsprechend positionieren, um in Abhängigkeit von der Ausbildung der Heizplatten eine elastische Verformung der Heizplatten zu bewirken.

Vorzugsweise ist jedes erste Federelement der Mehrzahl von ersten Federelementen versetzt zu jedem zweiten Federelement der Mehrzahl von zweiten Federelementen angeordnet. Mit anderen Worten sind alle Federelemente in der Richtung senkrecht zu ihrer Federachse versetzt zueinander angeordnet und es ist kein Paar von Federachsen eines ersten Federelements und eines zweiten Federelements koaxial ausgerichtet. Dadurch tragen alle Federelemente der Mehrzahl von ersten und zweiten Federelementen dazu bei, den gewünschten Effekt zu erzielen. Vorzugsweise sind die Federachsen aller Federelemente der Mehrzahl von ersten und zweiten Federelementen parallel zueinander ausgerichtet.

Das erste Werkzeug und das zweite Werkzeug können übereinander angeordnet sein, wobei dann das erste Werkzeug ein oberes Werkzeug und das zweite Werkzeug ein unteres Werkzeug darstellen können. Die Formfolie verläuft dann im Wesentlichen horizontal zwischen dem ersten und dem zweiten Werkzeug hindurch. Das erste Werkzeug und das zweite Werkzeug können aber auch nebeneinander angeordnet sein, sodass die Formfolie im Wesentlichen vertikal oder schräg mit einer vertikalen Komponente zwischen dem ersten und dem zweiten Werkzeug hindurch verläuft.

Das erste Werkzeug und das zweite Werkzeug sind vorzugsweise in einer Hubrichtung relativ zueinander bewegbar, insbesondere zwischen einem geöffneten Zustand und einem geschlossenen Zustand. Im geöffneten Zustand ist die Formfolie in einen Zwischenraum zwischen der ersten Heizplatte und der zweiten Heizplatte einführbar und zwischen diesen hindurchführbar. Im geschlossenen Zustand kontaktieren die erste Heizplatte und die zweite Heizplatte die zwischen ihnen angeordnete Formfolie. Die Heizvorrichtung kann zumindest einen Antrieb zum Bewegen des ersten Werkzeugs und/oder des zweiten Werkzeugs parallel zur Hubrichtung umfassen. In einer bevorzugten Ausführungsform ist ein erster Antrieb zum Bewegen des ersten Werkzeugs parallel zur Hubrichtung vorgesehen und das zweite Werkzeug ist stationär angeordnet. Es kann aber auch ein erster Antrieb zum Bewegen des ersten Werkzeugs und ein zweiter Antrieb zum Bewegen des zweiten Werkzeugs vorgesehen sein.

In der Heizvorrichtung ist eine Durchlaufrichtung definiert, in der die Formfolie durch die Heizvorrichtung bewegbar ist. Die Durchlaufrichtung ist bevorzugt senkrecht zur Hubrichtung ausgerichtet. Eine Querrichtung kann senkrecht zur Durchlaufrichtung und zur Hubrichtung definiert sein. Die Formfolie erstreckt sich im Wesentlichen in einer Ebene, die durch die Durchlaufrichtung und die Querrichtung definiert ist. Vorzugsweise sind die Federelemente der Mehrzahl von ersten und zweiten Federelementen zumindest in der Durchlaufrichtung und/oder der Querrichtung versetzt zueinander.

Die Mehrzahl von ersten Federelementen und die Mehrzahl von zweiten Federelementen lagern die erste Heizplatte und die zweite Heizplatte vorzugsweise in einer Richtung parallel zu den Federachsen beweglich. Die Federachsen der Mehrzahl von ersten und zweiten Federelementen sind bevorzugt parallel zur Hubrichtung ausgerichtet. So können die erste Heizplatte und die zweite Heizplatte einfedern, wenn sie unter Aufnahme der Formfolie zwischen sich aufeinandertreffen. Bevorzugt sind die erste Heizplatte und die zweite Heizplatte ausschließlich federnd gelagert. Die erste Heizplatte und die zweite Heizplatte können in einem Abstand zur ersten Aufnahme bzw. zur zweiten Aufnahme angeordnet sein, um ein Einfedern sowie die elastische Verformung der Heizplatten zu ermöglichen.

Die Mehrzahl von ersten Federelementen und die Mehrzahl von zweiten Federelementen ist vorzugsweise in einer vorbestimmten Anordnung angeordnet. Diese Anordnung kann in Abhängigkeit von den zu erwartenden Unebenheiten bzw. Toleranzen oder in Abhängigkeit der gewünschten elastischen Verformung der Heizplatten bestimmt werden. Beispielsweise können in Bereichen mit stärkeren zu erwartenden Unebenheiten mehr Federelemente vorgesehen sein als in Bereichen mit geringeren oder keinen zu erwartenden Unebenheiten. Alternativ kann zum Beispiel eine gleichmäßige Verteilung der Federelemente gewählt werden, um eine gleichmäßige elastische Verformung der Heizplatten zu bewirken.

Um die Anordnung der Mehrzahl von ersten Federelementen und der Mehrzahl von zweiten Federelementen zu beschreiben, wird die Mehrzahl von ersten und zweiten Federelementen vorteilhafterweise in einer Draufsicht bzw. in einer Projektion in eine Projektionsebene betrachtet, zu der die Federachsen senkrecht ausgerichtet sind.

In einer bevorzugten Ausführungsform sind die Federelemente der Mehrzahl von ersten Federelementen und der Mehrzahl von zweiten Federelementen entlang zumindest einer geraden Linie, bevorzugt entlang einer Mehrzahl von geraden Linien, angeordnet. Die gerade Linie liegt vorzugsweise in der Projektionsebene. Die Federachsen aller entlang jeweils einer geraden Linie angeordneten Federelemente schneiden diese gerade Linie.

Die zumindest eine gerade Linie kann parallel zur Durchlaufrichtung, parallel zur Querrichtung oder schräg zur Durchlaufrichtung ausgerichtet sein. Ist eine Mehrzahl von geraden Linien vorgesehen, sind diese Linien vorzugsweise parallel zueinander. Die entlang derselben geraden Linie angeordneten Federelemente sind bevorzugt in gleichmäßigen Abständen angeordnet, sodass die Federkräfte gleichmäßig auf die Heizplatten wirken, die folglich die Formfolie gleichmäßig erwärmen. Die Federelemente können aber auch in ungleichmäßigen Abständen angeordnet sein.

In einer alternativen Ausführungsform sind die Federelemente der Mehrzahl von ersten Federelementen und der Mehrzahl von zweiten Federelementen entlang zumindest einer kreisförmigen Linie, bevorzugt entlang einer Mehrzahl von kreisförmigen Linien, angeordnet. Die kreisförmige Linie liegt vorzugsweise in der Projektionsebene. Die Federachsen aller entlang jeweils einer kreisförmigen Linie angeordneten Federelemente schneiden die kreisförmige Linie. Ist eine Mehrzahl von kreisförmigen Linien vorgesehen, sind diese Linien vorzugsweise konzentrisch zueinander angeordnet. Die entlang derselben kreisförmigen Linie angeordneten Federelemente sind bevorzugt in gleichmäßigen Abständen angeordnet. Die Federelemente können aber auch in ungleichmäßigen Abständen angeordnet sein.

Es ist auch denkbar, verschiedene der zuvor beschriebenen Anordnungen zu kombinieren, wie zum Beispiel sich in unterschiedliche Richtungen erstreckende gerade Linien und/oder gerade Linien und kreisförmige Linien zu kombinieren. Ebenso ist es denkbar, die Federelemente der Mehrzahl von ersten Federelementen und der Mehrzahl von zweiten Federelementen entlang zumindest einer Linie anzuordnen, die eine andere Form aufweist, wie zum Beispiel einen gekrümmten, ellipsenförmigen oder sinusförmigen Verlauf.

Im Allgemeinen ist es von Vorteil, wenn stets abwechselnd ein erstes Federelement und ein zweites Federelement vorgesehen sind. Entsprechend wäre jedem ersten Federelement ein zweites Federelement am nächsten und umgekehrt. Besonders bevorzugt sind entlang jeder Linie, unabhängig von ihrer Form, abwechselnd ein erstes Federelement der Mehrzahl von ersten Federelementen und ein zweites Federelement der Mehrzahl von zweiten Federelementen angeordnet. Dadurch können die erste Heizplatte und die zweite Heizplatte elastisch verformt und in flächigen Kontakt mit der Formfolie gebracht werden, ohne dass in bestimmten Bereichen eine besonders große Verformung erforderlich wäre. Vielmehr wird eine Mehrzahl von entgegengesetzten Verformungen bewirkt, die einfach realisierbar sind.

Vorzugsweise umfasst die Mehrzahl von ersten Federelementen zwischen 2 und 30 erste Federelemente, mehr bevorzugt zwischen 5 und 25 erste Federelemente, noch mehr bevorzugt zwischen 10 und 20 erste Federelemente. Vorzugsweise umfasst die Mehrzahl von zweiten Federelementen zwischen 2 und 30 zweite Federelemente, mehr bevorzugt zwischen 5 und 25 zweite Federelemente, noch mehr bevorzugt zwischen 10 und 20 zweite Federelemente. Es hat sich herausgestellt, dass diese Anzahl von Federelementen bei gängigen Formaten von Heizplatten, insbesondere in Blistermaschinen, eine ausreichende elastische Verformung bewirkt, um die auftretenden Unebenheiten auszugleichen und eine flächige Anlage an der Formfolie zu ermöglichen.

Für die Mehrzahl von ersten Federelementen und die Mehrzahl von zweiten Federelementen kommen grundsätzlich alle dem Fachmann bekannten Arten von Federelementen und elastischen Elementen infrage, die sich zur Lagerung der ersten Heizplatte an der ersten Aufnahme und der zweiten Heizplatte an der zweiten Aufnahme eignen. Beispielsweise kann es sich um Blattfedern, Torsionsfedern, insbesondere Schraubenfedern, Tellerfedern, Gummifedern, Luftfedern oder Gasdruckfedern handeln. Vorteilhafterweise erzeugen die Mehrzahl von ersten Federelementen und die Mehrzahl von zweiten Federelementen eine Federkraft in einer Richtung parallel zur Federachse.

Grundsätzlich sind die Mehrzahl von ersten Federelementen und die Mehrzahl von zweiten Federelementen bevorzugt als Druckfedern ausgebildet. Ein besonders einfacher und kostengünstiger Aufbau kann erreicht werden, wenn die Mehrzahl von ersten Federelementen und die Mehrzahl von zweiten Federelementen jeweils als Schraubenfeder, insbesondere aus Edelstahl, ausgebildet sind. Für die Lagerung der Heizplatten ist es ferner von Vorteil, wenn die Mehrzahl von ersten Federelementen und die Mehrzahl von zweiten Federelementen parallel zur Federachse komprimierbar sind, wie dies beispielsweise bei den genannten Federelementen der Fall ist.

Es hat sich ferner herausgestellt, dass die gewünschte elastische Verformung bereits eintreten kann, wenn die Federelemente der Mehrzahl von ersten und zweiten Federelementen jeweils eine Höchstkraft aufweisen, die vorzugsweise zwischen 5 N und 25 N, mehr bevorzugt zwischen 10 N und 20 N beträgt. Mithin kann eine Federrate der Federelemente der Mehrzahl von ersten und zweiten Federelementen zwischen 1 N/mm und 10 N/mm, mehr bevorzugt zwischen 2 N/mm und 5 N/mm betragen. Dadurch kann bei dem verfügbaren Bewegungsspielraum der Heizplatten eine ausreichende Federkraft erzielt werden.

Um eine möglichst gute Wärmeübertragung auf die Formfolie und zugleich die gefederte Lagerung zu ermöglichen, umfasst die erste Heizplatte bevorzugt zumindest ein erstes Übertragungselement zum Kontaktieren der Formfolie und zumindest eine erste Heizeinrichtung zum Erwärmen des zumindest einen ersten Übertragungselements und umfasst die zweite Heizplatte bevorzugt ein zweites Übertragungselement zum Kontaktieren der Formfolie und zumindest eine zweite Heizeinrichtung zum Erwärmen des zumindest einen zweiten Übertragungselements.

Das zumindest eine erste Übertragungselement und das zumindest eine zweite Übertragungselement weisen vorzugsweise jeweils eine plattenförmige Gestalt mit einer Arbeitsfläche auf, die dem jeweils anderen aus dem ersten und dem zweiten Übertragungselement zugewandt ist. Dadurch wird ein flächiger Kontakt des ersten Übertragungselements und des zweiten Übertragungselements mit der Formfolie ermöglicht. Die Arbeitsfläche des zumindest einen ersten Übertragungselements und die Arbeitsfläche des zumindest einen zweiten Übertragungselements begrenzen den Zwischenraum zwischen dem ersten Werkzeug und dem zweiten Werkzeug.

Die zumindest eine erste Heizeinrichtung ist bevorzugt auf einer der Arbeitsfläche des zumindest einen ersten Übertragungselements gegenüberliegenden Rückseite des zumindest einen ersten Übertragungselements angeordnet und steht vorzugsweise in direktem Kontakt mit dem zumindest einen ersten Übertragungselement. Die zumindest eine zweite Heizeinrichtung ist bevorzugt auf einer der Arbeitsfläche des zumindest einen zweiten Übertragungselements gegenüberliegenden Rückseite des zumindest einen zweiten Übertragungselements angeordnet und steht vorzugsweise in direktem Kontakt mit dem zumindest einen zweiten Übertragungselement. So können die erste Heizeinrichtung und die zweite Heizeinrichtung möglichst nah am jeweiligen Übertragungselement bzw. der Arbeitsfläche angeordnet sein, um eine schnelle und möglichst verlustfreie Wärmeübertragung zu ermöglichen.

Eine möglichst gute Wärmeübertragung und zugleich ausreichend gute Verformbarkeit wird vorzugsweise dadurch erreicht, dass das zumindest eine erste Übertragungselement und das zumindest eine zweite Übertragungselement eine Metallplatte umfassen. Bevorzugt ist die Metallplatte aus Aluminium oder einer Aluminiumlegierung gebildet, es kommen aber auch andere Metalle infrage. Das erste Übertragungselement und das zweite Übertragungselement können ferner eine Beschichtung aufweisen.

In einer bevorzugten Ausführungsform weisen das zumindest eine erste Übertragungselement und das zumindest eine zweite Übertragungselement jeweils eine Dicke auf, die zwischen 1 mm und 15 mm, mehr bevorzugt zwischen 2 mm und 10 mm, noch mehr bevorzugt zwischen 2 mm und 6 mm oder zwischen 2 mm und 4 mm beträgt. Je dünner das zumindest eine erste Übertragungselement und das zumindest eine zweite Übertragungselement sind, desto besser sind sie mittels der Federelemente elastisch verformbar.

Die erste Heizeinrichtung und die zweite Heizeinrichtung können jeweils ein Heizelement in Form eines Glimmerplatten-, Silikon- oder Dickschicht-Heizelements umfassen. Diese eignen sich besonders gut, da bei geringem Bauraum ausreichend Heizleistung bereitgestellt werden kann.

Es ist weiterhin von Vorteil, wenn die erste Heizplatte und/oder die zweite Heizplatte eine Mehrzahl von Segmenten umfasst. Insbesondere können die erste und/oder die zweite Heizplatte in diesem Fall physisch in die Mehrzahl von Segmenten aufgeteilt sein. Besonders bevorzugt umfasst die erste Heizplatte dann eine Mehrzahl von ersten Übertragungselementen und die zweite Heizplatte eine Mehrzahl von zweiten Übertragungselementen, vorzugsweise jeweils entsprechend der Anzahl von Segmenten. Durch die Aufteilung in Segmente können Fertigungstoleranzen verringert und flexible und somit einfach verformbare Heizplatten-Segmente gebildet werden. Die Segmente der Mehrzahl von Segmenten ist bevorzugt in Durchlaufrichtung hintereinander angeordnet.

Bei gängigen Formaten von Heizplatten, insbesondere in Blistermaschinen, hat sich eine Anzahl von 2 bis 5, vorzugsweise von 3 oder 4 Segmenten als geeignet erwiesen. Grundsätzlich können je Segment der Mehrzahl von Segmenten 2 bis 8 Federelemente, bevorzugt 4 bis 5 Federelemente vorgesehen sein.

Jedes Segment der Mehrzahl von Segmenten der ersten Heizplatte und/oder der zweiten Heizplatte kann eine erste bzw. eine zweite Heizeinrichtung aufweisen. Zusätzlich oder alternativ können mehrere Heizeinrichtungen in Querrichtung nebeneinander angeordnet sein, um zum Beispiel in Abhängigkeit von der Breite der Formfolie unterschiedlich breite Bereiche der ersten Heizplatte und der zweiten Heizplatte zu erwärmen.

Die erste Aufnahme und die zweite Aufnahme umfassen bevorzugt jeweils benachbart zur ersten bzw. zweiten Heizplatte einen thermischen Isolator oder sind in diesem Bereich aus einem thermisch isolierenden Material gebildet. Die erzeugte Wärme kann so zu einem möglichst großen Anteil in Richtung der Übertragungselemente und somit in Richtung der Formfolie abgegeben werden.

Vorzugsweise ist die erste Heizplatte ausschließlich an der ersten Aufnahme federnd gelagert und ist die zweite Heizplatte ausschließlich an der zweiten Aufnahme federnd gelagert. Hierzu kann die erste Aufnahme eine Mehrzahl von ersten Ausnehmungen aufweisen, in denen jeweils ein Federelement der Mehrzahl von ersten Federelementen zumindest teilweise aufgenommen ist, und kann die erste Heizplatte eine Mehrzahl von ersten Aufnahmeelementen umfassen, auf denen jeweils ein Federelement der Mehrzahl von ersten Federelementen gelagert ist. Entsprechend kann die zweite Aufnahme eine Mehrzahl von zweiten Ausnehmungen aufweisen, in denen jeweils ein Federelement der Mehrzahl von zweiten Federelementen zumindest teilweise aufgenommen ist, und kann die zweite Heizplatte eine Mehrzahl von zweiten Aufnahmeelementen umfassen, auf denen jeweils ein Federelement der Mehrzahl von zweiten Federelementen gelagert ist. Auf diese Weise kann die gefederte Lagerung der ersten Heizplatte und der zweiten Heizplatte besonders einfach und kostengünstig umgesetzt werden.

Die Aufnahmeelemente der Mehrzahl von ersten Aufnahmeelementen und der Mehrzahl von zweiten Aufnahmeelementen können jeweils durch einen Bolzen oder Stift gebildet sein, integral mit der jeweiligen Heizplatte oder separat ausgebildet sein, und zum Beispiel mit der jeweiligen Heizplatte verbunden, insbesondere verschraubt sein. Bevorzugt ist die Mehrzahl von ersten Aufnahmeelementen koaxial zur Mehrzahl von ersten Ausnehmungen angeordnet und ist die Mehrzahl von zweiten Aufnahmeelementen koaxial zur Mehrzahl von zweiten Ausnehmungen angeordnet. Die Mehrzahl von ersten und zweiten Federelementen können direkt oder mittels einer Hülse oder dergleichen auf der Mehrzahl von ersten bzw. zweiten Aufnahmeelement gelagert sein.

Eine erfindungsgemäße Verpackungsmaschine umfasst eine Heizvorrichtung gemäß der vorliegenden Erfindung. Alle hierin in Zusammenhang mit der Verpackungsmaschine beschriebenen Merkmale der Heizvorrichtung sind auch auf die Heizvorrichtung als solche übertragbar und umgekehrt.

Besonders bevorzugt ist die Verpackungsmaschine eine Blistermaschine zur Herstellung von Blisterpackungen. Die Formfolie ist vorzugsweise eine Kunststofffolie, insbesondere aus Polypropylen. Solche Folien können vergleichsweise dick sein, sodass ein gezielter Wärmeeintrag sowie eine ausreichende Erwärmung besonders wichtig sind. Die vorliegende Erfindung kann in diesem Fall ihre Vorteile besonders gut entfalten.

Vorzugsweise umfasst die Verpackungsmaschine weiterhin eine Formvorrichtung zum Formen von Näpfen in die Formfolie, die in Durchlaufrichtung hinter der Heizvorrichtung angeordnet ist, und eine Füllvorrichtung zum Füllen von Produkten in die Näpfe. Bei den Produkten kann es sich insbesondere um einnehmbare medizinische oder pharmazeutische Produkte, Nahrungs- oder Nahrungsergänzungsmittel in Form von Tabletten, Kapseln, Dragees oder dergleichen handeln. Alternativ kann es sich bei den Produkten um medizinische Produkte bzw. Vorrichtungen, wie Spritzen oder Injektoren, oder Behältnisse, wie Fläschchen, Vials, Karpulen oder dergleichen handeln. Aber auch kosmetische Produkte bzw. deren Behältnisse oder Konsumgüter sind denkbar.

Weiterhin kann die Verpackungsmaschine eine Schließvorrichtung zum Verschließen der Näpfe umfassen, die vorzugsweise als Siegelvorrichtung zum Siegeln einer Deckfolie an die Formfolie ausgebildet ist. Darüber hinaus kann die Verpackungsmaschine eine Trennvorrichtung, insbesondere eine Stanzvorrichtung, zum Trennen einer Mehrzahl von Verpackungen aus dem Verbund von Formfolie und Deckfolie umfassen.

Ein Verfahren zum Betreiben einer solchen Verpackungsmaschine umfasst vorzugsweise die folgenden Schritte:
Anordnen eines Abschnitts der Formfolie zwischen dem ersten Werkzeug und dem zweiten Werkzeug im geöffneten Zustand des ersten Werkzeugs und des zweiten Werkzeugs;
Bewegen des ersten Werkzeugs und des zweiten Werkzeugs relativ zueinander in den geschlossenen Zustand, in dem das erste Werkzeug und das zweite Werkzeug den Abschnitt der Formfolie kontaktieren, wobei die erste Heizplatte und die zweite Heizplatte elastisch verformt werden;
Bewegen des ersten Werkzeugs und des zweiten Werkzeugs relativ zueinander zurück in den geöffneten Zustand.

Da das erste Werkzeug und das zweite Werkzeug derart zugestellt werden, dass es zu einer elastischen Verformung der ersten und der zweiten Heizplatte kommt, passen sich die erste Heizplatte und die zweite Heizplatte aneinander an, wodurch Unebenheiten und Toleranzen ausgeglichen und ein flächiger Kontakt zur Formfolie hergestellt wird. Dadurch wird eine gleichmäßige und exakte Erwärmung der Formfolie ermöglicht, ohne den Arbeits- und Kostenaufwand bei Herstellung und Montage der Heizplatten wesentlich zu erhören.

Das Bewegen des ersten Werkzeugs und des zweiten Werkzeugs relativ zueinander in den geschlossenen Zustand kann das Bewegen des ersten und/oder des zweiten Werkzeugs umfassen, insbesondere mittels des ersten bzw. zweiten Antriebs. In einer bevorzugten Ausführungsform wird das erste Werkzeug parallel zur Hubrichtung bewegt, während das zweite Werkzeug stationär angeordnet ist. Trifft die erste Heizplatte auf den Abschnitt der Formfolie und die zweite Heizplatte, federn die erste Heizplatte und die zweite Heizplatte ein. Vorzugsweise wird das erste Werkzeug weiter parallel zur Hubrichtung bewegt, wobei eine Kraft zur elastischen Verformung der ersten und der zweiten Heizplatte erzeugt wird. Der flächige Kontakt zur Formfolie ist dann hergestellt und diese wird erwärmt. Anschließend kann die Heizvorrichtung geöffnet werden, vorzugweise durch Bewegen des ersten Werkzeugs parallel zur Hubrichtung.

Alle hierin in Zusammenhang mit dem Verfahren beschriebenen Merkmale der Heizvorrichtung und der Verpackungsmaschine sind auch auf die Heizvorrichtung bzw. Verpackungsmaschine als solche übertragbar und umgekehrt.

Weitere Merkmale und Vorteile der vorliegenden Erfindung ergeben sich aus der nachfolgenden Beschreibung unter Bezugnahme auf die beigefügten Zeichnungen.
- Fig. 1: ist eine schematische Darstellung einer Verpackungsmaschine.
- Fig. 2: ist eine schematische Darstellung einer Heizvorrichtung.
- Fig. 3: ist eine schematische Darstellung wesentlicher Komponenten einer erfindungsgemäßen Heizvorrichtung in einem geöffneten Zustand.
- Fig. 4: ist eine schematische Darstellung der erfindungsgemäßen Heizvorrichtung nach Fig. 3 in einem geschlossenen Zustand.
- Fig. 5a-d: zeigen unterschiedliche Varianten von beispielhaften Anordnungen von Federelementen der erfindungsgemäßen Heizvorrichtung.

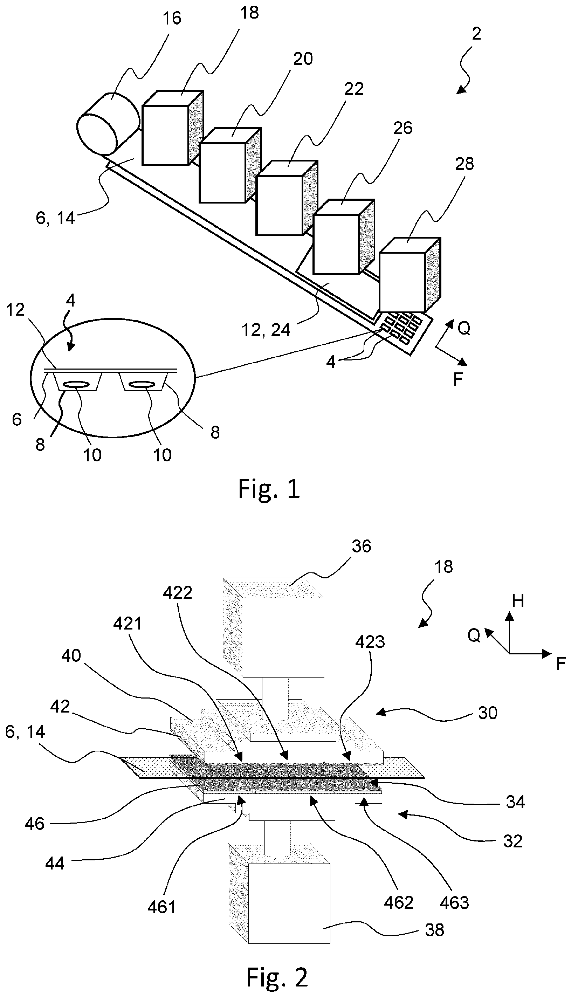

In Fig. 1 zeigt schematisch eine Verpackungsmaschine 2 zum Herstellen von Verpackungen 4 in einer perspektivischen Ansicht sowie eine Verpackung 4 in einer Detailansicht. Die Verpackungsmaschine 2 ist bevorzugt eine Blistermaschine und die hergestellten Verpackungen 4 sind bevorzugt Blisterpackungen. Jede Verpackung 4 umfasst mindestens eine in einer Formfolie 6 ausgebildete Produktaufnahme 8 in Form eines Napfs zur Aufnahme von Produkten 10. In jeder Produktaufnahme 8 ist bevorzugt genau ein Produkt 10 aufgenommen, bei dem es sich insbesondere um ein einnehmbares medizinisches oder pharmazeutisches Produkt, ein Nahrungs- oder Nahrungsergänzungsmittel in Form einer Tablette, einer Kapsel, eines Dragees oder dergleichen handeln kann. An die Formfolie 6 kann eine Deckfolie 12 gesiegelt sein, um die Produktaufnahmen 8 zu verschließen.

In der dargestellten Ausführungsform der Verpackungsmaschine 2 weist diese eine Mehrzahl von Bearbeitungsstationen bzw. -vorrichtungen auf, wie nachfolgend genauer beschrieben. Es versteht sich jedoch, dass die vorliegende Erfindung nicht auf eine bestimmte Verpackungs- bzw. Blistermaschine beschränkt ist.

Die Formfolie 6 kann eine thermoplastische Folie sein, in der die Produktaufnahmen 8 durch Thermoformen erzeugt werden. Die Formfolie 6 kann als Formfolienbahn 14 vorzugsweise auf einer Vorratsrolle 16 bereitgestellt werden. Die Verpackungsmaschine 2 umfasst eine Heizvorrichtung 18 zum Erwärmen der Formfolie 6 bzw. Formfolienbahn 14, sowie eine Formvorrichtung 20 zum Formen der Produktaufnahmen 8 in die Formfolie 6 bzw. Formfolienbahn 14. In einer Füllvorrichtung 22 können die Produkte 10 den Produktaufnahmen 8 zugeführt und in diese eingefügt werden. Anschließend können die Produktaufnahmen 8 verschlossen werden, vorzugsweise durch Siegeln einer Deckfolienbahn 24 an die Formfolienbahn 14 in einer Siegelvorrichtung 26 der Verpackungsmaschine 2. Die Deckfolie 12 ist folglich in Form der Deckfolienbahn 24 bereitgestellt, vorzugsweise ebenfalls auf einer Vorratsrolle (nicht dargestellt), die der Formfolienbahn 14 von oben zugeführt wird.

Weiterhin umfasst die Verpackungsmaschine 2 eine Trennvorrichtung 28 zum Heraustrennen der einzelnen Verpackungen 4 aus der Formfolienbahn 14 bzw. aus dem Verbund aus Formfolienbahn 14 und Deckfolienbahn 24. Die Trennvorrichtung 28 ist vorzugsweise als Stanzvorrichtung ausgebildet. Nach der Trennvorrichtung 28 liegen die Verpackungen 4 vereinzelt vor und können mittels einer Übergabeeinrichtung (nicht dargestellt), wie zum Beispiel sogenannten Pickern, weiteren Verarbeitungsschritten zugeführt werden.

Die Formfolie 6 bzw. Formfolienbahn 14 durchläuft die Verpackungsmaschine 2 und insbesondere die Heizvorrichtung 18 in einer Durchlaufrichtung F. Eine Querrichtung Q ist senkrecht zur Durchlaufrichtung F definiert. Eine durch die Durchlaufrichtung F und die Querrichtung Q definierte Ebene kann auch als Arbeitsebene bezeichnet werden, in der die Formfolienbahn 14 angeordnet ist und durch die Vorrichtungen 18, 20, 22, 26, 28 der Verpackungsmaschine 2 bearbeitet wird.

In Fig. 2 ist eine Heizvorrichtung 18, wie sie in der Verpackungsmaschine 2 zum Einsatz kommen kann, detaillierter dargestellt. Die Heizvorrichtung 18 umfasst ein erstes Werkzeug 30 und ein zweites Werkzeug 32. In Fig. 2 befinden sich das erste Werkzeug 30 und das zweite Werkzeug 32 in einem geöffneten Zustand, in dem zwischen dem ersten Werkzeug 30 und dem zweiten Werkzeug 32 ein Zwischenraum 34 ausgebildet ist, durch den die Formfolie 6 als Formfolienbahn 14 geführt wird. Die Formfolienbahn 14 wird vorzugsweise getaktet in Durchlaufrichtung F bewegt, sodass in jedem Takt ein Abschnitt der Formfolienbahn 14 in der Heizvorrichtung 18 angeordnet ist. Das erste Werkzeug 30 und das zweite Werkzeug 32 können in einer Hubrichtung H zwischen dem geöffneten Zustand und einem geschlossenen Zustand, in dem das erste Werkzeug 30 und das zweite Werkzeug 32 die Formfolie 6 kontaktieren, relativ zueinander bewegbar sein. Vorzugsweise umfasst die Heizvorrichtung 18 einen Antrieb 36, 38 zum Bewegen eines der beiden Werkzeuge 30, 32, insbesondere einen ersten Antrieb 36 zum Bewegen des ersten Werkzeugs 30. Wie dargestellt, kann die Heizvorrichtung 18 zum Bewegen des ersten Werkzeugs 30 und des zweiten Werkzeugs 32 parallel zur Hubrichtung H auch den ersten Antrieb 36 für das erste Werkzeug 30 und einen zweiten Antrieb 38 für das zweite Werkzeug 32 umfassen.

Das erste Werkzeug 30 umfasst eine erste Aufnahme 40 und eine erste Heizplatte 42, die an der ersten Aufnahme 40 gelagert ist, und das zweite Werkzeug 32 umfasst eine zweite Aufnahme 44 und eine zweite Heizplatte 46, die an der zweiten Aufnahme 44 gelagert ist. Die erste Heizplatte 42 und die zweite Heizplatte 46 begrenzen den Zwischenraum 34 zwischen dem ersten Werkzeug 30 und dem zweiten Werkzeug 32 und sind der Formfolie 6 zugewandt. Im geschlossenen Zustand des ersten Werkzeugs 30 und des zweiten Werkzeugs 32 kontaktiert die erste Heizplatte 42 eine Oberseite der Formfolie 6 und die zweite Heizplatte 46 eine Unterseite der Formfolie 6.

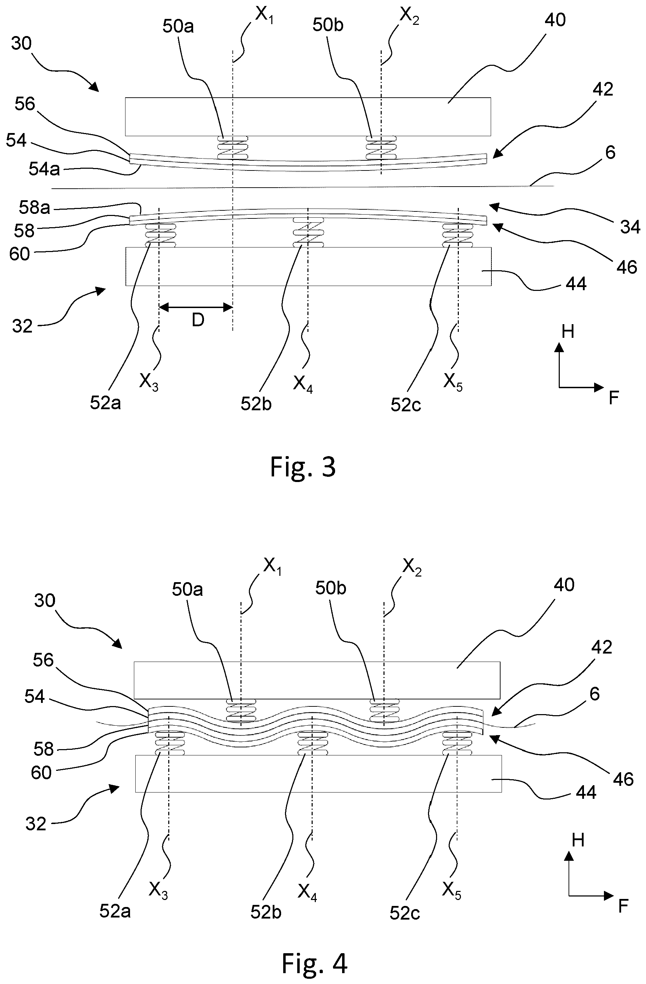

In Fig. 3 sind das erste Werkzeug 30 und das zweite Werkzeug 32 schematisch in einer Seitenansicht dargestellt. Grundsätzlich können die Heizplatten 42, 46 fertigungs- und/oder montagebedingt Unebenheiten aufweisen, wie in Fig. 3 beispielhaft durch eine Krümmung der Heizplatten 42, 46 angedeutet. Die die Unebenheit erzeugende Verformung der Heizplatten 42, 46 ist zur Veranschaulichung in der Figur verstärkt dargestellt, kann aber durchaus zwischen 0,1 mm und 1 mm, insbesondere zwischen 0,2 mm und 0,5 mm je Heizplatte 42, 46 betragen, mithin im geschlossenen Zustand zu einem Spalt zwischen den Heizplatten 42, 46 zwischen 0,5 mm und 1 mm führen. Dies hat zur Folge, dass die erste Heizplatte 42 und die zweite Heizplatte 46 die Formfolie 6 nicht flächig kontaktieren würden, wenn das erste Werkzeug 30 und das zweite Werkzeug 32 in die geschlossene Stellung bewegt werden. Die dadurch bedingte ungleichmäßige Temperaturverteilung in der Formfolie 6 kann sich negativ auf den nachfolgenden Formvorgang und die Qualität der Formfolie 6 sowie der erzeugten Näpfe 8 auswirken.

Erfindungsgemäß ist daher vorgesehen, dass die erste Heizplatte 42 mittels einer Mehrzahl von ersten Federelementen 50a, 50b an der ersten Aufnahme 40 gelagert ist und die zweite Heizplatte 46 mittels einer Mehrzahl von zweiten Federelementen 52a, 52b, 52c an der zweiten Aufnahme 44 gelagert ist, wobei die Federelemente der Mehrzahl von ersten Federelementen 50a, 50b und der Mehrzahl von zweiten Federelementen 52a, 52b, 52c in einer Richtung senkrecht zu ihrer Federachse Xᵢ versetzt zueinander angeordnet sind. Die Richtung senkrecht zur Federachse Xᵢ ist besonders bevorzugt parallel zu der Ebene, die durch die Durchlaufrichtung F und die Querrichtung Q definiert ist. Die Federachsen Xᵢ benachbarter Federelemente 50a, 50b, 52a, 52b, 52c sind also in Durchlaufrichtung F und/oder in Querrichtung Q beabstandet zueinander angeordnet, wie durch den Abstand D der Federachse X₁ des ersten Federelements 50a und der Federachse X₃ des zweiten Federelements 52a angedeutet.

Durch die versetzte Anordnung wird erreicht, dass sich die Federkräfte der Mehrzahl von ersten Federelementen 50a, 50b und die Federkräfte der Mehrzahl von zweiten Federelementen 52a, 52b, 52c nicht gegenseitig aufheben, sondern eine Verformung der ersten Heizplatte 42 und der zweiten Heizplatte 46 ermöglichen. Die Mehrzahl von ersten Federelementen 50a, 50b und die Mehrzahl von zweiten Federelementen 52a, 52b, 52c sind bevorzugt derart ausgebildet und angeordnet, dass die erste Heizplatte 42 und die zweite Heizplatte 46 im geschlossenen Zustand des ersten und des zweiten Werkzeugs 30, 32 elastisch verformt werden, wie in Fig. 4 schematisch dargestellt. Auch in Fig. 4 ist die Verformung der Heizplatten 42, 46 zur besseren Veranschaulichung verstärkt dargestellt.

Es ist zu erkennen, dass trotz der im geöffneten Zustand des ersten und des zweiten Werkzeugs 30, 32 (siehe Fig. 3) vorhandenen Unebenheiten der ersten Heizplatte 42 und der zweiten Heizplatte 46 im geschlossenen Zustand (siehe Fig. 4) ein flächiger Kontakt der ersten Heizplatte 42 und der zweiten Heizplatte 46 mit der Formfolie 6 erreicht wird, sodass eine gezielte und gleichmäßige Wärmeeinleitung in die Formfolie 6 möglich ist.

Wie in Fig. 3 und 4 zu sehen, ist bevorzugt jedes Federelement der Mehrzahl von ersten Federelementen 50a, 50b versetzt zu jedem Federelement der Mehrzahl von zweiten Federelementen 52a, 52b, 52c angeordnet und ist kein Paar aus einem ersten Federelement 50a, 50b und einem zweiten Federelement 52a, 52b, 52c koaxial ausgerichtet, sodass alle Federelemente zur gewünschten Verformung beitragen.

Die Mehrzahl von ersten Federelementen 50a, 50b und die Mehrzahl von zweiten Federelementen 52a, 52b, 52c sind vorzugsweise Druckfedern, die parallel zu ihrer jeweiligen Federachse Xᵢ komprimierbar sind, und lagern die erste Heizplatte 42 und die zweite Heizplatte 46 beweglich in einer Richtung parallel zur Hubrichtung H. Die Federachsen Xᵢ sind daher bevorzugt parallel zur Hubrichtung H ausgerichtet.

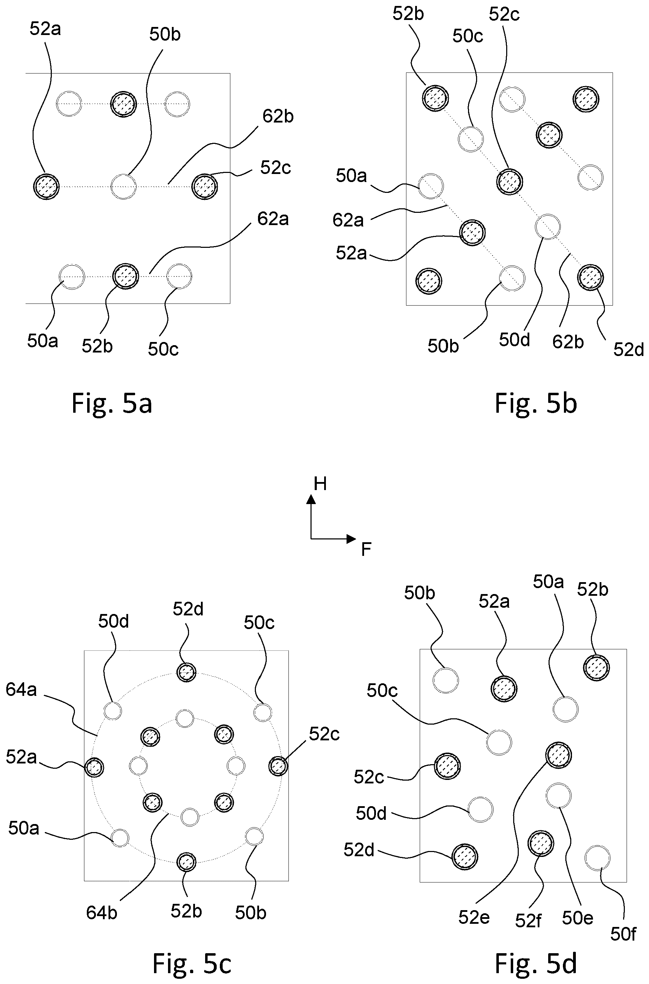

Wie ferner in Fig. 3 und 4 dargestellt, ist es im Allgemeinen von Vorteil, wenn in Durchlaufrichtung F und/oder in Querrichtung Q stets ein erstes Federelement 50a, 50b und ein zweites Federelement 52a, 52b, 52c abwechselnd angeordnet sind. Weitere vorteilhafte Anordnungen der Mehrzahl von ersten Federelementen 50a, 50b und der Mehrzahl von zweiten Federelementen 52a, 52b, 52c sind unter Bezugnahme auf Fig. 5a-d beschrieben.

Damit die erste Heizplatte 42 und die zweite Heizplatte 46 gut verformbar sind und zugleich eine möglichst gute Wärmeübertragung auf die Formfolie 6 ermöglicht wird, umfasst die erste Heizplatte 42 bevorzugt ein erstes Übertragungselement 54 zur Übertragung von Wärme auf die Formfolie 6 und eine erste Heizeinrichtung 56 zum Erwärmen des ersten Übertragungselements 54. Entsprechend umfasst die zweite Heizplatte 46 bevorzugt ein zweites Übertragungselement 58 zur Übertragung von Wärme auf die Formfolie 6 und eine zweite Heizeinrichtung 60 zum Erwärmen des zweiten Übertragungselements 58.

Das erste Übertragungselement 54 und das zweite Übertragungselement 58 weisen vorzugsweise eine im Wesentlichen plattenförmige Gestalt auf, um die Formfolie 6 flächig zu kontaktieren, und können durch eine Metallplatte, insbesondere aus Aluminium oder einer Aluminiumlegierung, gebildet sein. Die jeweils der Formfolie 6 zugewandte Oberfläche des ersten Übertragungselements 54 und des zweiten Übertragungselements 58 bildet eine Arbeitsfläche 54a, 58a der Übertragungselemente 54, 58.

Die erste Heizeinrichtung 56 kann auf einer der Arbeitsfläche 54a des ersten Übertragungselements gegenüberliegenden Rückseite des ersten Übertragungselements 54 angeordnet sein und in direktem Kontakt mit diesem stehen. Die zweite Heizeinrichtung 60 kann auf einer der Arbeitsfläche 58a des zweiten Übertragungselements 58 gegenüberliegenden Rückseite des zweiten Übertragungselements 58 angeordnet sein und in direktem Kontakt mit diesem stehen. Bevorzugt sind die erste und die zweite Heizeinrichtung 56, 60 als Glimmerplatten-Heizelemente ausgebildet. Auf diese Weise können das erste und das zweite Übertragungselement 54, 58 ausreichend dünn für eine elastische Verformung ausgebildet sein, während sie gleichmäßig erwärmbar sind und die Wärme gut auf die Formfolie 6 übertragen.

Es ist weiterhin von Vorteil, wenn die erste Heizplatte 42 und die zweite Heizplatte 46 jeweils eine Mehrzahl von Segmenten 421, 422, 423, 461, 462, 463 umfassen. Wie in Fig. 2 zu sehen, umfasst die erste Heizplatte 42 hier drei Segmente 421, 422, 423 und umfasst die zweite Heizplatte 46 hier drei Segmente 461, 462, 463, die jeweils in Durchlaufrichtung F hintereinander angeordnet sind. Die erste und die zweite Heizplatte 42, 46 sind in diesem Fall physisch unterteilt, sodass die erste Heizplatte 42 eine Mehrzahl von ersten Übertragungselementen 54 und eine Mehrzahl von ersten Heizeinrichtungen 56 umfasst und die zweite Heizplatte 46 eine Mehrzahl von zweiten Übertragungselementen 58 sowie eine Mehrzahl von zweiten Heizeinrichtungen 60 umfasst. Jeweils ein Paar aus einem Übertragungselement 54, 58 und einer Heizeinrichtung 56, 60 kann ein Segment der ersten bzw. der zweiten Heizplatte 42, 46 bilden. Jedes Segment der Mehrzahl von Segmenten 421, 422, 423, 461, 462, 463 ist mittels Federelementen gelagert, wobei bevorzugt 4 bis 5 Federelemente in jedem Segment vorgesehen sind.

Verschiedene Anordnungen der Mehrzahl von ersten Federelementen 50 und der Mehrzahl von zweiten Federelementen 52 sind nachfolgend unter Bezugnahme auf Fig. 5a-d anhand einer Draufsicht bzw. Projektion der Federelemente in eine Projektionsebene beschrieben, zu der die Federachsen Xᵢ senkrecht stehen.

In der in Fig. 5a und Fig. 5b dargestellten Ausführungsform sind die Federelemente der Mehrzahl von ersten Federelementen 50a, 50b, 50c, 50d und der Mehrzahl von zweiten Federelementen 52a, 52b, 52c, 52d entlang einer Mehrzahl von geraden Linien 62a, 62b angeordnet. Wie dargestellt, ist es bevorzugt, wenn entlang jeweils einer Linie 62a, 62b stets ein erstes Federelement 50a, 50b, 50c, 50d und ein zweites Federelement 52a, 52b, 52c, 52d abwechselnd angeordnet sind. Die Mehrzahl von Linien 62a, 62b können parallel zueinander angeordnet sein, sowie parallel zur Durchlaufrichtung F (siehe Fig. 5a), parallel zur Querrichtung Q (nicht dargestellt) oder schräg zur Durchlaufrichtung F (siehe Fig. 5b) ausgerichtet sein. Alternativ können die Linien nicht gerade, sondern zum Beispiel gekrümmt sein.

In der Ausführungsform nach Fig. 5c sind die Federelemente der Mehrzahl von ersten Federelementen 50a, 50b, 50c, 50d und der Mehrzahl von zweiten Federelementen 52a, 52b, 52c, 52d entlang einer Mehrzahl von kreisförmigen Linien 64a, 64b angeordnet. Auch hier ist es bevorzugt, wenn entlang jeweils einer Linie 64a, 64b stets ein erstes Federelement 50a, 50b, 50c, 50d und ein zweites Federelement 52a, 52b, 52c, 52d abwechselnd angeordnet sind. Die Mehrzahl von Linien 64a, 64b können konzentrisch ausgerichtet sein, wie dargestellt. Alternativ können die Linien nicht kreisförmig, sondern zum Beispiel elliptisch sein.

In Fig. 5d ist schließlich eine Ausführungsform dargestellt, bei der die Mehrzahl von ersten Federelementen 50a, 50b, 50c, 50d und die Mehrzahl von zweiten Federelementen 52a, 52b, 52c, 52d in keiner erkennbaren Ordnung positioniert sind. Durch die beliebige Anordnung der Federelemente können diese individuell dort angeordnet werden, wo zum Beispiel aufgrund der Fertigung oder Belastung der Heizplatten Unebenheiten auftreten und eine bestimmte Verformung gewünscht ist. Ferner können dadurch beliebige Verformungen generiert werden, um in jedem Einzelfall ein flächiges Anliegen der Heizplatten 42, 46 an der Formfolie 6 zu gewährleisten.

Mit der vorliegenden Erfindung werden eine Heizvorrichtung, eine Verpackungsmaschine mit einer solchen Heizvorrichtung sowie ein Verfahren zum Betreiben einer solchen Verpackungsmaschine bereitgestellt, die durch eine gefederte Lagerung der Heizplatten mittels zueinander versetzter Federelemente eine elastische Verformung der Heizplatten bewirken und dadurch selbst bei Unebenheit der Heizplatten eine flächige Anlage und somit optimale Wärmeübertragung auf die Formfolie ermöglichen. Weitere Ausführungsformen sind für den Fachmann basierend auf der hierin enthaltenen detaillierten Beschreibung bevorzugter Ausführungsbeispiele ersichtlich.

## Patentansprüche

1. Heizvorrichtung (18) zum Erwärmen einer Formfolie (6), wobei die Heizvorrichtung (18) umfasst:
ein erstes Werkzeug (30), das eine erste Aufnahme (40) und eine erste Heizplatte (42) umfasst, die mittels einer Mehrzahl von ersten Federelementen (50a, 50b) an der ersten Aufnahme (40) gelagert ist; und
ein zweites Werkzeug (32), das eine zweite Aufnahme (44) und eine zweite Heizplatte (46) umfasst, die mittels einer Mehrzahl von zweiten Federelementen (52a, 52b, 52c) an der zweiten Aufnahme (44) gelagert ist;
**dadurch gekennzeichnet, dass**
die Federelemente (50, 52) der Mehrzahl von ersten Federelementen (50a, 50b) und der Mehrzahl von zweiten Federelementen (52a, 52b, 52c) jeweils eine Federachse (Xᵢ) aufweisen und in zumindest einer Richtung senkrecht zur Federachse (Xᵢ) versetzt zueinander angeordnet sind.

2. Heizvorrichtung (18) nach Anspruch 1, **dadurch gekennzeichnet, dass** die Mehrzahl von ersten Federelementen (50a, 50b) und die Mehrzahl von zweiten Federelementen (52a, 52b, 52c) derart ausgebildet und angeordnet sind, dass die erste Heizplatte (42) und/oder die zweite Heizplatte (46) in einem geschlossenen Zustand des ersten und des zweiten Werkzeugs (30, 32) elastisch verformt werden.

3. Heizvorrichtung (18) nach Anspruch 1 oder 2, **dadurch gekennzeichnet, dass** die Mehrzahl von ersten Federelementen (50a, 50b) und die Mehrzahl von zweiten Federelementen (52a, 52b, 52c) entlang zumindest einer geraden Linie (62a, 62b), bevorzugt entlang einer Mehrzahl von geraden Linien (62a, 62b), angeordnet sind.

4. Heizvorrichtung (18) nach Anspruch 1 oder 2, **dadurch gekennzeichnet, dass** die Mehrzahl von ersten Federelementen (50a, 50b) und die Mehrzahl von zweiten Federelementen (52a, 52b, 52c) entlang zumindest einer kreisförmigen Linie (64a, 64b), bevorzugt entlang einer Mehrzahl von kreisförmigen Linien (64a, 64b), angeordnet sind.

5. Heizvorrichtung (18) nach Anspruch 3 oder 4, **dadurch gekennzeichnet, dass** entlang der Linie (62a, 62b, 64a, 64b) abwechselnd ein erstes Federelement (50) der Mehrzahl von ersten Federelementen (50a, 50b) und ein zweites Federelement (52) der Mehrzahl von zweiten Federelementen (52a, 52b, 52c) angeordnet ist.

6. Heizvorrichtung (18) nach einem der vorangehenden Ansprüche, **dadurch gekennzeichnet, dass** die Mehrzahl von ersten Federelementen (50a, 50b) zwischen 2 und 30 erste Federelemente (50), vorzugsweise zwischen 5 und 25 erste Federelemente (50), mehr bevorzugt zwischen 10 und 20 erste Federelemente (50) umfasst, und/oder
die Mehrzahl von zweiten Federelementen (52a, 52b, 52c) zwischen 2 und 30 zweite Federelemente (52), vorzugsweise zwischen 5 und 25 zweite Federelemente (52), mehr bevorzugt zwischen 10 und 20 zweite Federelemente (52) umfasst.

7. Heizvorrichtung (18) nach einem der vorangehenden Ansprüche, **dadurch gekennzeichnet, dass** die Mehrzahl von ersten Federelementen (50a, 50b) und die Mehrzahl von zweiten Federelementen (52a, 52b, 52c) als Druckfedern, insbesondere in Form von Schraubenfedern, ausgebildet sind.

8. Heizvorrichtung (18) nach einem der vorangehenden Ansprüche, **dadurch gekennzeichnet, dass** die erste Heizplatte (42) zumindest ein erstes Übertragungselement (54) zum Kontaktieren der Formfolie (6) und zumindest eine erste Heizeinrichtung (56) zum Erwärmen des zumindest einen ersten Übertragungselements (54) umfasst und die zweite Heizplatte (46) zumindest ein zweites Übertragungselement (58) zum Kontaktieren der Formfolie (6) und zumindest eine zweite Heizeinrichtung (60) zum Erwärmen des zumindest einen zweiten Übertragungselements (58) umfasst.

9. Heizvorrichtung (18) nach Anspruch 8, **dadurch gekennzeichnet, dass** das zumindest eine erste Übertragungselement (54) und das zumindest eine zweite Übertragungselement (58) eine Metallplatte umfassen, die vorzugsweise aus Aluminium oder einer Aluminiumlegierung gebildet ist.

10. Heizvorrichtung (18) nach Anspruch 8 oder 9, **dadurch gekennzeichnet, dass** das zumindest eine erste Übertragungselement (54) und das zumindest eine zweite Übertragungselement (58) jeweils eine Dicke aufweisen, die zwischen 1 mm und 15 mm, vorzugsweise zwischen 2 mm und 10 mm beträgt.

11. Heizvorrichtung (18) nach einem der vorangehenden Ansprüche, **dadurch gekennzeichnet, dass** die erste Heizplatte (42) und/oder die zweite Heizplatte (46) eine Mehrzahl von Segmenten (421, 422, 423, 461, 462, 463) umfasst.

12. Heizvorrichtung (18) nach einem der vorangehenden Ansprüche, **dadurch gekennzeichnet, dass** die erste Aufnahme (40) eine Mehrzahl von ersten Ausnehmungen aufweist, in denen jeweils ein Federelement (50) der Mehrzahl von ersten Federelementen (50a, 50b) aufgenommen ist, und die erste Heizplatte (42) eine Mehrzahl von ersten Aufnahmeelementen umfasst, auf denen jeweils ein Federelement (52) der Mehrzahl von ersten Federelementen (50a, 50b) gelagert ist.

13. Heizvorrichtung (18) nach einem der vorangehenden Ansprüche, **dadurch gekennzeichnet, dass** die zweite Aufnahme (44) eine Mehrzahl von zweiten Ausnehmungen aufweist, in denen jeweils ein Federelement (52) der Mehrzahl von zweiten Federelementen (52a, 52b, 52c) aufgenommen ist, und die zweite Heizplatte (46) eine Mehrzahl von zweiten Aufnahmeelementen umfasst, auf denen jeweils ein Federelement (52) der Mehrzahl von zweiten Federelementen (52a, 52b, 52c) gelagert ist.

14. Verpackungsmaschine (2) umfassend eine Heizvorrichtung (18) nach einem der vorangehenden Ansprüche.

15. Verfahren zum Betreiben einer Verpackungsmaschine (2) nach Anspruch 14 mit den folgenden Schritten:
Anordnen eines Abschnitts der Formfolie (6) zwischen dem ersten Werkzeug (30) und dem zweiten Werkzeug (32) in einem geöffneten Zustand des ersten Werkzeugs (30) und des zweiten Werkzeugs (32);
Bewegen des ersten Werkzeugs (30) und des zweiten Werkzeugs (32) relativ zueinander in einen geschlossenen Zustand, in dem das erste Werkzeug (30) und das zweite Werkzeug (32) den Abschnitt der Formfolie (6) kontaktieren, wobei die erste Heizplatte (42) und die zweite Heizplatte (46) elastisch verformt werden;
Bewegen des ersten Werkzeugs (30) und des zweiten Werkzeugs (32) relativ zueinander zurück in den geöffneten Zustand.

## Claims

1. A heating device (18) for heating a forming film (6), wherein the heating device (18) comprises:
a first tool (30), which comprises a first mount (40) and a first heating plate (42), which is mounted on the first mount (40) by means of a plurality of first spring elements (50a, 50b); and
a second tool (32), which comprises a second mount (44) and a second heating plate (46), which is mounted on the second mount (44) by means of a plurality of second spring elements (52a, 52b, 52c);
**characterized in that**
the spring elements (50, 52) of the plurality of first spring elements (50a, 50b) and of the plurality of second spring elements (52a, 52b, 52c) each have a spring axis (Xᵢ) and are spaced apart from each other in at least one direction perpendicular to the spring axis (Xᵢ).

2. The heating device (18) according to claim 1, **characterized in that** the plurality of first spring elements (50a, 50b) and the plurality of second spring elements (52a, 52b, 52c) are formed and arranged in such a way that the first heating plate (42) and/or the second heating plate (46) are elastically deformed in a closed state of the first and the second tool (30, 32).

3. The heating device (18) according to claim 1 or 2, **characterized in that** the plurality of first spring elements (50a, 50b) and the plurality of second spring elements (52a, 52b, 52c) are arranged along at least one straight line (62a, 62b), preferably along a plurality of straight lines (62a, 62b).

4. The heating device (18) according to claim 1 or 2, **characterized in that** the plurality of first spring elements (50a, 50b) and the plurality of second spring elements (52a, 52b, 52c) are arranged along at least one circular line (64a, 64b), preferably along a plurality of circular lines (64a, 64b).

5. The heating device (18) according to claim 3 or 4, **characterized in that** a first spring element (50) of the plurality of first spring elements (50a, 50b) and a second spring element (52) of the plurality of second spring elements (52a, 52b, 52c) are arranged alternately along the line (62a, 62b, 64a, 64b).

6. The heating device (18) according to any one of the preceding claims, **characterized in that** the plurality of first spring elements (50a, 50b) comprises between 2 and 30 first spring elements (50), preferably between 5 and 25 first spring elements (50), more preferably between 10 and 20 first spring elements (50); and/or
the plurality of second spring elements (52a, 52b, 52c) comprises between 2 and 30 second spring elements (52), preferably between 5 and 25 second spring elements (52), more preferably between 10 and 20 second spring elements (52).

7. The heating device (18) according to any one of the preceding claims, **characterized in that** the plurality of first spring elements (50a, 50b) and the plurality of second spring elements (52a, 52b, 52c) are formed by compression springs, in particular in the form of helical springs.

8. The heating device (18) according to any one of the preceding claims, **characterized in that** the first heating plate (42) comprises at least one first transfer element (54) for contacting the forming film (6) and at least one first heating means (56) for heating the at least one first transfer element (54), and the second heating plate (46) comprises at least one second transfer element (58) for contacting the forming film (6) and at least one second heating means (60) for heating the at least one second transfer element (58).

9. The heating device (18) according to claim 8, **characterized in that** the at least one first transfer element (54) and the at least one second transfer element (58) comprise a metal plate, preferably made from aluminum or an aluminum alloy.

10. The heating device (18) according to claim 8 or 9, **characterized in that** the at least one first transfer element (54) and the at least one second transfer element (58) each have a thickness, which is between 1 mm and 15 mm, preferably between 2 mm and 10 mm.

11. The heating device (18) according to any one of the preceding claims, **characterized in that** the first heating plate (42) and/or the second heating plate (46) comprises a plurality of segments (421, 422, 423, 461, 462, 463).

12. The heating device (18) according to any one of the preceding claims, **characterized in that** the first mount (40) has a plurality of first recesses, wherein one spring element (50) of the plurality of first spring elements (50a, 50b) is received in each of the plurality of first recesses, and the first heating plate (42) comprises a plurality of first receiving elements, wherein one spring element (52) of the plurality of first spring elements (50a, 50b) is mounted on each of the plurality of first receiving elements.

13. The heating device (18) according to any one of the preceding claims, **characterized in that** the second mount (44) has a plurality of second recesses, wherein one spring element (52) of the plurality of second spring elements (52a, 52b, 52c) is received in each of the plurality of second recesses, and the second heating plate (46) comprises a plurality of second receiving elements, wherein one spring element (52) of the plurality of second spring elements (52a, 52b, 52c) is mounted on each of the plurality of second receiving elements.

14. A packaging machine (2) comprising a heating device (18) according to any one of the preceding claims.

15. A method for operating a packaging machine (2) according to claim 14 comprising the following steps:
arranging a section of the forming film (6) between the first tool (30) and the second tool (32) in an open state of the first tool (30) and of the second tool (32);
moving the first tool (30) and the second tool (32) relative to one another into a closed state, in which the first tool (30) and the second tool (32) contact the section of the forming film (6), wherein the first heating plate (42) and the second heating plate (46) are elastically deformed;
moving the first tool (30) and the second tool (32) relative to one another back into the open state.

## Revendications

1. Dispositif de chauffage (18), destiné à chauffer un film de formage (6), le dispositif de chauffage (18) comprenant :
un premier outil (30), qui comprend un premier réceptacle (40) et une première plaque chauffante (42), qui au moyen d'une pluralité de premiers éléments à ressort (50a, 50b) est logée sur le premier réceptacle (40) ; et
un deuxième outil (32), qui comprend un deuxième réceptacle (44) et une deuxième plaque chauffante (46), qui au moyen d'une pluralité de deuxièmes éléments à ressort (52a, 52b, 52c) est logée sur le deuxième réceptacle (44) ;
**caractérisé en ce que**
les éléments à ressort (50, 52) de la pluralité de premiers éléments à ressort (50a, 50b) et de la pluralité de deuxièmes éléments à ressort (52a, 52b, 52c) comportent chacun un axe de ressort (Xᵢ) et sont placés dans au moins une direction avec un décalage les uns par rapport aux autres à la perpendiculaire de l'axe de ressort (Xᵢ).

2. Dispositif de chauffage (18) selon la revendication 1, **caractérisé en ce que** la pluralité de premiers éléments à ressort (50a, 50b) et la pluralité de deuxièmes éléments à ressort (52a, 52b, 52c) sont conçus et placés de telle sorte, que dans la position fermée du premier et du deuxième outils (30, 32), la première plaque chauffante (42) et / ou la deuxième plaque chauffante (46) soient élastiquement déformées.

3. Dispositif de chauffage (18) selon la revendication 1 ou 2, **caractérisé en ce que** la pluralité de premiers éléments à ressort (50a, 50b) et la pluralité de deuxièmes éléments à ressort (52a, 52b, 52c) sont placés le long d'au moins une ligne droite (62a, 62b), de manière préférentielle, le long d'une pluralité de lignes droites (62a, 62b).

4. Dispositif de chauffage (18) selon la revendication 1 ou 2, **caractérisé en ce que** la pluralité de premiers éléments à ressort (50a, 50b) et la pluralité de deuxièmes éléments à ressort (52a, 52b, 52c) sont placés le long d'au moins une ligne circulaire (64a, 64b), de manière préférentielle, le long d'une pluralité de lignes circulaires (64a, 64b).

5. Dispositif de chauffage (18) selon la revendication 3 ou 4, **caractérisé en ce que** le long de la ligne (62a, 62b, 64a, 64b) est placé alternativement un premier élément à ressort (50) de la pluralité de premiers éléments à ressort (50a, 50b) et un deuxième élément à ressort (52) de la pluralité de deuxièmes éléments à ressort (52a, 52b, 52c).

6. Dispositif de chauffage (18) selon l'une quelconque des revendications précédentes, **caractérisé en ce que** la pluralité de premiers éléments à ressort (50a, 50b) comprend entre 2 et 30 premiers éléments à ressort (50), de préférence entre 5 et 25 premiers éléments à ressort (50), de manière plus préférentielle, entre 10 et 20 premiers éléments à ressort (50) ; et / ou
la pluralité de deuxièmes éléments à ressort (52a, 52b, 52c) comprend entre 2 et 30 deuxièmes éléments à ressort (52), de préférence entre 5 et 25 deuxièmes éléments à ressort (52), de manière plus préférentielle, entre 10 et 20 deuxièmes éléments à ressort (52).

7. Dispositif de chauffage (18) selon l'une quelconque des revendications précédentes, **caractérisé en ce que** la pluralité de premiers éléments à ressort (50a, 50b) et la pluralité de deuxièmes éléments à ressort (52a, 52b, 52c) sont conçus sous la forme de ressorts de pression, notamment sous la forme de ressorts hélicoïdaux.

8. Dispositif de chauffage (18) selon l'une quelconque des revendications précédentes, **caractérisé en ce que** la première plaque chauffante (42) comprend au moins un premier élément de transmission (54), destiné à entrer en contact avec le film de formage (6) et au moins un premier système chauffant (56), destiné à chauffer l'au moins un premier élément de transmission (54) et la deuxième plaque chauffante (46) comprend au moins un deuxième élément de transmission (58), destiné à entrer en contact avec le film de formage (6) et au moins un deuxième système chauffant (60), destiné à chauffer l'au moins un deuxième élément de transmission (58).

9. Dispositif de chauffage (18) selon la revendication 8, **caractérisé en ce que** l'au moins un premier élément de transmission (54) et l'au moins un deuxième élément de transmission (58) comprennent une plaque métallique, qui est constituée de préférence en aluminium ou en un alliage d'aluminium.

10. Dispositif de chauffage (18) selon la revendication 8 ou 9, **caractérisé en ce que** l'au moins un premier élément de transmission (54) et l'au moins un deuxième élément de transmission (58) présentent chacun une épaisseur qui est comprise entre 1 mm et 15 mm, de préférence entre 2 mm et 10 mm.

11. Dispositif de chauffage (18) selon l'une quelconque des revendications précédentes, **caractérisé en ce que** la première plaque chauffante (42) et / ou la deuxième plaque chauffante (46) comprend une pluralité de segments (421, 422, 423, 461, 462, 463).

12. Dispositif de chauffage (18) selon l'une quelconque des revendications précédentes, **caractérisé en ce que** le premier réceptacle (40) comporte une pluralité de premiers évidements, dans chacun desquels est reçu chaque fois un élément à ressort (50) de la pluralité de premiers éléments à ressort (50a, 50b) et la première plaque chauffante (42) comprend une pluralité de premiers éléments récepteurs sur lesquels est logé chaque fois un élément à ressort (52) de la pluralité de premiers éléments à ressort (50a, 50b).

13. Dispositif de chauffage (18) selon l'une quelconque des revendications précédentes, **caractérisé en ce que** le deuxième réceptacle (44) comporte une pluralité de deuxièmes évidements, dans chacun desquels est reçu un élément à ressort (52) de la pluralité de deuxièmes éléments à ressort (52a, 52b, 52c) et la deuxième plaque chauffante (46) comprend une pluralité de deuxièmes éléments récepteurs sur lesquels est logé chaque fois un élément à ressort (52) de la pluralité de deuxièmes éléments à ressort (52a, 52b, 52c).

14. Machine d'emballage (2), comprenant un dispositif de chauffage (18) selon l'une quelconque des revendications précédentes.

15. Procédé opérationnel d'une machine d'emballage (2) selon la revendication 14 avec les étapes suivantes consistant à :
placer une portion du film de formage (6) entre le premier outil (30) et le deuxième outil (32) dans une position ouverte du premier outil (30) et du deuxième outil (32) ;
déplacer le premier outil (30) et le deuxième outil (32) l'un par rapport à l'autre dans une position fermée, dans laquelle le premier outil (30) et le deuxième outil (32) entrent en contact avec la partie du film de formage (6), la première plaque chauffante (42) et la deuxième plaque chauffante (46) étant élastiquement déformées ;
déplacer le premier outil (30) et le deuxième outil (32) l'un par rapport à l'autre en retour dans la position ouverte.
